# EUROPÄISCHE PATENTSCHRIFT

(11) **EP 3 825 596 B1**
(45) Veröffentlichungstag und Bekanntmachung des Hinweises auf die Patenterteilung: **07.06.2023**
(21) Anmeldenummer: 20000422.4
(22) Anmeldetag: 23.11.2020
(51) Int. Cl.: F16N 21/02, F16N 21/04, F16L 37/00, F16L 37/23, F16L 37/42

(54) **SCHMIERNIPPEL UND KUPPLUNG FÜR EINEN SOLCHEN**
LUBRICATING NIPPLE AND COUPLING FOR SUCH A NIPPLE
MAMELON DE LUBRIFICATION ET ACCOUPLEMENT POUR UN TEL MAMELON

(30) Priorität: 22.11.2019 DE 102019131619
(43) Veröffentlichungstag der Anmeldung: 26.05.2021
(73) Patentinhaber: Drehmatec GmbH, 33818 Leopoldshöhe (DE)
(72) Erfinder: Firat, Sedat, 33605 Bielefeld (DE)
(74) Vertreter: Manitz Finsterwald Patent- und Rechtsanwaltspartnerschaft mbB

(56) Entgegenhaltungen:
- AU-A4- 2018 101 263
- FR-A- 1 122 396
- GB-A- 419 648
- US-A- 1 619 455
- US-A1- 2012 061 953

## Beschreibung

Die Erfindung betrifft einen Schmiernippel, eine Kupplung für einen Schmiernippel und ein System, das einen Schmiernippel und eine Kupplung umfasst.

Schmiernippel werden in der Technik schon seit langer Zeit verwendet, um beispielsweise ein Lager mit einem Schmiermittel zu versorgen. Der Schmiernippel ist ein kleiner Stutzen, der beispielsweise mittels eines Gewindes mit einem Gehäuse des Lagers verbunden ist. Über eine geeignete Kupplung kann eine Fettpresse formschlüssig an den Schmiernippel angesetzt werden, um mittels der Fettpresse Schmiermittel nachzufüllen und das Lager abzuschmieren. Dabei weist der Schmiernippel ein Ventil auf, das in einer Längsbohrung des Schmiernippels angeordnet ist und unter Druck öffnet, um das Schmiermittel über die Längsbohrung passieren zu lassen. Wenn keine Kupplung bzw. Fettpresse mit dem Schmiernippel verbunden ist, verhindert das Ventil eine Verschmutzung des Schmiernippels und des Lagers.

Für Schmiernippel gibt es in Deutschland Normen, z.B. DIN 71412. Gemäß dieser Norm weisen die Schmiernippel einen kugelförmigen Abschnitt auf, der zur Verbindung mit einer Kupplung bzw. Fettpresse vorgesehen ist. Aufgrund der Kugelform dieses Abschnitts weist der Schmiernippel ferner einen hinterschnittenen Abschnitt auf, mit dem ein geeignetes Element einer Kupplung in Eingriff gelangt, um die formschlüssige Verbindung zwischen der Kupplung bzw. Fettpresse und dem Schmiernippel herzustellen.

Nachteilig ist bei bekannten Schmiernippeln, dass diese aufgrund der Kugelform des Abschnitts, der zur Verbindung mit einer Kupplung vorgesehen ist, einer erheblichen Abnutzung ausgesetzt sind, insbesondere dann, wenn eine Kupplung häufig mit dem Schmiernippel verbunden und wieder gelöst wird. Außerdem ist aufgrund der Kugelform des Abschnitts zum Anschließen ein gewisser Kraftaufwand erforderlich, um die Verbindung zwischen Kupplung und Schmiernippel herzustellen.

GB 419,648 A offenbart einen Schmiernippel nach dem Oberbegriff des Anspruchs 1. Die AU 2018101263 A4 offenbart eine Kupplung nach dem Oberbegriff des Anspruchs 4.

Eine Aufgabe der Erfindung besteht darin, einen Schmiernippel und eine Kupplung für einen solchen zu schaffen, die eine verringerte Abnutzung selbst bei häufigem Verbinden und Lösen des Schmiernippels und der Kupplung aufweisen und ein schnelles und einfaches Herstellen bzw. Lösen der Verbindung zwischen Schmiernippel und Kupplung gestatten.

Diese Aufgabe wird durch die Gegenstände der unabhängigen Ansprüche gelöst.

Ein erfindungsgemäßer Schmiernippel umfasst einen Anschlussabschnitt zur Verbindung des Schmiernippels mit einer Kupplung und eine Längsachse. Der Anschlussabschnitt weist ein Anschlussende, einen hinterschnittenen Abschnitt für einen Eingriff eines Befestigungselements der Kupplung und einen Führungsabschnitt für das Befestigungselement der Kupplung auf, der zwischen dem Anschlussende und dem hinterschnittenen Abschnitt angeordnet ist. Ferner weist der Anschlussabschnitt zwischen dem Anschlussende und dem hinterschnittenen Abschnitt an zumindest einer Position entlang der Längsachse in einer Ebene senkrecht zu der Längsachse einen maximalen Querschnitt auf. Erfindungsgemäß erstreckt sich die Außenkontur des Führungsabschnitts in einer Ebene durch die Längsachse innerhalb einer geradlinigen Verbindung zwischen dem Außenumfang des Anschlussendes und dem maximalen Querschnitt.

Der Begriff "Querschnitt" bezieht sich dabei auf die Querschnittsfläche des Schmiernippels in einer jeweiligen Ebene senkrecht zur Längsachse. Bei einem vorzugsweise kreisförmigen Querschnitt ist dieser durch den Durchmesser des Anschlussabschnitts definiert, wobei der Durchmesser durch die Längsachse verläuft. Wenn der Anschlussabschnitt an einer Position einen maximalen Querschnitt bzw. eine maximale Querschnittsfläche aufweist, weist er an dieser Position selbstverständlich auch einen maximalen Durchmesser auf. Die Position mit maximalem Querschnitt befindet sich dabei insbesondere an einem dem hinterschnittenen Abschnitt zugewandten Ende des Führungsabschnitts. Ferner entspricht der "geradlinigen Verbindung" zwischen dem Außenumfang des Anschlussendes und dem maximalen Querschnitt bzw. Querschnittsdurchmesser beispielsweise eine umlaufende Kegelfläche, die sich bei einer Drehung einer Strecke ergibt, welche den Außenumfang des Anschlussendes mit dem Außenumfang des Schmiernippels an der Position entlang der Längsachse verbindet, an welcher der Anschlussabschnitt den maximalen Querschnitt aufweist.

Im Gegensatz zu den genormten Schmiernippeln aus dem Stand der Technik, die einen nach außen gewölbten Anschlussabschnitt bzw. Führungsabschnitt aufweisen, ist der erfindungsgemäße Schmiernippel innerhalb des Führungsabschnitts "nach innen" gewölbt bzw. ausgespart, da der Führungsabschnitt innerhalb und nicht wie im Stand der Technik außerhalb der geradlinigen Verbindung zwischen dem Außenumfang des Anschlussendes und dem maximalen Querschnitt verläuft. Da das Befestigungselement der Kupplung somit nicht über eine kugelförmige Wölbung des Schmiernippels bewegt werden muss und stattdessen an dem nach innen ausgerichteten Führungsabschnitt entlanggleitet, wenn die Kupplung mit dem Schmiernippel in Eingriff gelangt, lässt sich eine Verbindung zwischen der Kupplung und dem erfindungsgemäßen Schmiernippel leichter herstellen. Dabei ist ein geringerer Kraftaufwand erforderlich. Außerdem ist die Reibung zwischen dem Befestigungselement der Kupplung und dem Führungsabschnitt des Schmiernippels verringert, da das Befestigungselement entlang des Führungsabschnitts sozusagen von innen nach außen gleitet und nicht über eine nach außen gerichtete Wölbung hinwegbewegt werden muss. Dadurch ist die Abnutzung des Schmiernippels verringert, insbesondere beim häufigen Verbinden und Lösen der Kupplung.

Der Anschlussabschnitt weist ferner zwischen dem Führungsabschnitt und dem Anschlussende einen Abschnitt mit einem konstanten Querschnitt auf, der geringer als der Querschnitt innerhalb des hinterschnittenen Abschnitts ist. Da der Anschlussabschnitt an dem Anschlussende somit einen verringerten Querschnittsdurchmesser aufweist, kann die Kupplung bei dieser Ausführungsform auf besonders einfache Weise an den Schmiernippel angefügt bzw. an diesem "eingefädelt" werden. Ferner lässt sich ein Abschnitt mit konstantem Querschnitt wiederum auf einfache Weise herstellen.

Vorteilhafte Ausführungsformen der Erfindung sind den Unteransprüchen, der Beschreibung und in den Figuren angegeben.

Gemäß einer Ausführungsform ist die Außenkontur des Führungsabschnitts in einer Ebene durch die Längsachse konkav gekrümmt, wobei der Führungsabschnitt einen insbesondere konstanten Krümmungsradius aufweisen kann. Konkav gekrümmt bedeutet in diesem Zusammenhang, dass die Außenkontur des Führungsabschnitts in einer Ebene, in der die Längsachse liegt, in radialer Richtung senkrecht zur Längsachse näher an dieser liegt als die geradlinige Verbindung zwischen dem Außenumfang des Anschlussendes und dem maximalen Querschnitt. Da das Befestigungselement der Kupplung bei dieser Ausführungsform aufgrund der konkaven Krümmung an einer glatten Kurve ohne Stufen und Kanten entlangläuft, ist der Kraftaufwand zur Verbindung des Schmiernippels mit der Kupplung besonders gering. Dadurch wird die Abnutzung des Schmiernippels ebenfalls weiter verringert. Außerdem lässt sich ein Führungsabschnitt mit einem konstanten Krümmungsradius auf einfache Weise herstellen.

Alternativ kann die Außenkontur des Führungsabschnitts ausschließlich geradlinige Abschnitte umfassen. Ein solcher Führungsabschnitt lässt sich ebenfalls besonders einfach herstellen, er kann jedoch kantenartige Übergänge aufweisen.

Zwischen dem Abschnitt mit konstantem Querschnitt und dem Anschlussende kann ein weiterer Abschnitt vorhanden sein, dessen Außenkontur nach innen in Richtung der Längsachse abgefast ist. Zusätzlich kann der Anschlussabschnitt zwischen dem hinterschnittenen Abschnitt und dem Führungsabschnitt einen weiteren Abschnitt mit konstantem maximalem Querschnitt aufweisen.

Weiterer Gegenstand der Erfindung ist eine Kupplung für einen Schmiernippel, wie er beispielsweise vorstehend beschrieben ist. Die Kupplung umfasst einen Kupplungskörper, eine mit dem Kupplungskörper verbundene Innenhülse und ein Befestigungselement. Die Innenhülse weist eine Bohrung auf, welche bezogen auf die Längsachse der Kupplung schräg verläuft und in welcher das Befestigungselement beweglich angeordnet ist. Dadurch ist das Befestigungselement ausgebildet, um den Schmiernippel in einer vorbestimmten Position bezüglich der Innenhülse zu fixieren.

Die Kupplung stellt das Gegenstück zum erfindungsgemäßen Schmiernippel dar, wobei das Befestigungselement bei einer Verbindung der Kupplung mit dem Schmiernippel beispielsweise an dem Führungsabschnitt des Schmiernippels entlanggleiten kann. Da das Befestigungselement innerhalb der schräg verlaufenden Bohrung der Innenhülse beweglich ist, kann das Befestigungselement mit einer geringen Kraft verschoben werden, wenn die Kupplung mit dem Schmiernippel verbunden wird. Die Kupplung gestattet somit aufgrund der für die Bewegung des Befestigungselements vorgesehenen schrägen Bohrung eine einfache und schnelle Verbindung der Kupplung mit dem Schmiernippel. Aufgrund des schrägen Verlaufs der Bohrung der Innenhülse kann sich das Befestigungselement beispielsweise gleichzeitig von der Längsachse weg und in Richtung des Kupplungskörpers bewegen, wenn der Schmiernippel mit der Kupplung in Eingriff gelangt.

Die Kupplung kann zusätzlich eine bewegliche Außenhülse aufweisen, die mittels eines äußeren Vorspannelements gegenüber dem Kupplungskörper vorgespannt ist. Das Befestigungselement der Kupplung kann ferner in einen ausgesparten Abschnitt der Außenhülse hinein verschiebbar sein, um die Außenhülse in Richtung des Kupplungskörpers zu verschieben.

Da die Bohrung der Innenhülse bezogen auf die Längsachse der Kupplung schräg verläuft, kann sich das Befestigungselement während der Verschiebung der Außenhülse ebenfalls zumindest teilweise in Richtung des Kupplungskörpers bewegen. Die bewegliche Außenhülse kann dabei eine zusätzliche Führung und Sicherung des Befestigungselements darstellen. Außerdem kann die Verbindung zwischen der Kupplung und dem Schmiernippel vorzugsweise dadurch gelöst werden, dass die Außenhülse in die entgegengesetzte Richtung, d.h. von dem Kupplungskörper weg, bewegt wird.

Ferner kann die Außenhülse an einer Innenfläche einen Vorsprung aufweisen, der mit einer Aussparung des Kupplungskörpers einen Bajonettverschluss bildet. Ein solcher Bajonettverschluss kann die Außenhülse an dem Kupplungskörper verriegeln. Dadurch wird eine unerwünschte Verschiebung der Außenhülse gegenüber dem Kupplungskörper verhindert, die dazu führen könnte, dass sich der Schmiernippel von der Kupplung löst. Die Verhinderung einer solchen Verschiebung der Außenhülse mittels des Bajonettverschlusses ist vor allem dann vorteilhaft, wenn ein Schmiermittel, das mittels des Schmiernippels und der Kupplung einem zu schmierenden Gegenstand zugeführt werden soll, unter erhöhtem Druck steht. Die Aussparung des Kupplungskörpers kann ferner mehrere Abschnitte umfassen, die eine gestufte Kulissenführung für den Vorsprung der Außenhülse bereitstellen.

Bei einer weiteren Ausführungsform umfasst das Befestigungselement mehrere Kugeln, die in einer jeweiligen Bohrung der Innenhülse angeordnet sind. Dabei verlaufen die jeweiligen Bohrungen der Innenhülse vorzugsweise unter einem Neigungswinkel zwischen 40° und 45° bezüglich der Längsachse der Kupplung. Das Befestigungselement kann beispielsweise vier Kugeln umfassen.

Das Befestigungselement lässt sich bei dieser Ausführungsform auf besonders einfache Weise herstellen, da lediglich Kugeln erforderlich sind, die in jeweiligen schrägen Bohrungen der Innenhülse geführt werden. Dabei verlaufen die Bohrungen der Innenhülse bevorzugt von der Längsachse weg, und sie sind in der Richtung des Kupplungskörpers ausgerichtet. Während der Schmiernippel mit der Kupplung in Eingriff gelangt, werden die Kugeln in den schrägen Bohrungen beispielsweise aufgrund einer Führung entlang des Führungsabschnitts des Schmiernippels derart innerhalb der schrägen Bohrungen verschoben, dass sich ihr Abstand bezogen auf die Längsachse vergrößert. Aufgrund der schrägen Bohrungen zur Führung der Kugeln, die in der Richtung des Kupplungskörpers und somit mit der Bewegungsrichtung des Schmiernippels ausgerichtet sind, sobald dieser mit der Kupplung in Eingriff gelangt, ist wiederum nur eine geringe Kraft erforderlich, um den Eingriff zwischen der Kupplung und dem Schmiernippel herzustellen.

Die Kupplung kann außerdem einen beweglichen Kolben aufweisen. Der bewegliche Kolben ist innerhalb der Innenhülse angeordnet und weist einen Durchgang für ein Schmiermittel auf, bei dem es sich vorzugsweise um ein hydraulisches Schmiermittel wie etwa Fett oder Öl handelt. Ferner ist der Kolben mittels eines inneren Vorspannelements gegenüber dem Kupplungskörper vorgespannt und befindet sich dann in einer Anfangsposition, wenn kein Schmiernippel mit der Kupplung verbunden ist. Wenn die Kupplung jedoch mit einem Schmiernippel in Verbindung steht, ist der Kolben bezüglich der Anfangsposition in Richtung des Kupplungskörpers verschoben, und der Durchgang des Kolbens steht mit einer Längsbohrung des Schmiernippels in Verbindung.

Ferner ist der Durchgang in dem beweglichen Kolben vorzugsweise verschlossen, wenn sich der Kolben in der Anfangsposition befindet. Dadurch wird ein unbeabsichtigtes Austreten des Schmiermittels aus der Kupplung verhindert, wenn keine Verbindung mit einem Schmiernippel vorhanden ist. Der Durchgang des Kolbens wird ferner erst dann durch die Verbindung mit der Längsbohrung des Schmiernippels geöffnet, wenn tatsächlich eine Verbindung zwischen der Kupplung und dem Schmiernippel vorliegt.

Ferner kann die Kupplung zusätzlich ein Dichtungselement umfassen, das zunächst zwischen dem Kolben und der Innenhülse angeordnet ist, wenn sich der Kolben in der Anfangsposition befindet. Aufgrund der Bewegung des Kolbens, wenn der Schmiernippel mit der Kupplung in Eingriff gelangt, befindet sich der Kolben dann, wenn die Kupplung mit dem Schmiernippel verbunden ist, zwischen dem Dichtungselement und dem Kupplungskörper.

In der Anfangsposition ohne Verbindung zwischen der Kupplung und dem Schmiernippel verhindert das Dichtungselement aufgrund seiner Anordnung zwischen dem Kolben und der Innenhülse, dass das Schmiermittel auf unbeabsichtigte Weise aus der Kupplung austritt. Ist die Kupplung hingegen mit dem Schmiernippel verbunden, befindet sich das Dichtungselement im Vergleich zu der Anfangsposition auf der anderen Seite des beweglichen Kolbens, der sich zwischen Dichtungselement und Kupplungskörper befindet. Dadurch wird der Kolben gegenüber weiteren Elementen der Kupplung, wie beispielsweise gegenüber der Bohrung der Innenhülse und gegenüber der Außenhülse, derart abgedichtet, dass das Schmiermittel über die Kupplung lediglich in die Längsbohrung des Schmiernippels gelangen kann.

Außerdem betrifft die Erfindung ein System, das einen Schmiernippel und eine Kupplung umfasst, wie sie vorstehend beschrieben sind. Bei einem solchen System bewegt sich das Befestigungselement der Kupplung dann, wenn der Schmiernippel mit der Kupplung in Eingriff gelangt, entlang des Führungsabschnitts des Schmiernippels und in der Bohrung der Kupplung von der Längsachse des Schmiernippels weg nach außen. Um den Schmiernippel und die Kupplung aneinander zu fixieren, steht das Befestigungselement anschließend mit dem hinterschnittenen Abschnitt des Schmiernippels in Eingriff.

Weiterer Gegenstand der Erfindung ist außerdem ein Schmiersystem, das zumindest einen Schmiermittelkanal und zumindest einen Schmiernippel umfasst, wie er vorstehend beschrieben ist. Der Schmiermittelkanal kann Bestandteil einer Maschine oder einer technischen Anlage sein, um beispielsweise einem zu schmierenden Lager ein Schmiermittel zuzuführen. Das Schmiermittel, das durch den Schmiermittelkanal geleitet wird, ist vorzugsweise ein hydraulisches Fluid wie etwa Öl oder Fett.

Ferner betrifft die Erfindung eine Verwendung eines Schmiernippels, wie er vorstehend beschrieben ist, in einem Schmiersystem.

Die Erfindung wird rein beispielhaft anhand der beiliegenden Figuren erläutert, die Ausführungsformen eines erfindungsgemäßen Schmiernippels und einer erfindungsgemäßen Kupplung darstellen. Es zeigen:
- Fig. 1A und 1B: eine Seitenansicht bzw. eine Schnittansicht eines erfindungsgemäßen Schmiernippels,
- Fig. 2A und 2B: eine Seitenansicht bzw. eine Schnittansicht des erfindungsgemäßen Schmiernippels und einer erfindungsgemäßen Kupplung, wobei diese noch nicht miteinander in Eingriff stehen,
- Fig. 3: eine Schnittansicht des Schmiernippels und der Kupplung von Fig. 2B, wobei ein Führungsabschnitt des Schmiernippels an Kugeln innerhalb der Kupplung anliegt,
- Fig. 4: den Schmiernippel und die Kupplung von Fig. 2B und 3, wobei diese weiter miteinander in Eingriff gelangt sind und die Kugeln der Kupplung an einem Vorsprung des Schmiernippels anliegen,
- Fig. 5: den Schmiernippel und die Kupplung von Fig. 2B, 3 und 4 in einem verbundenen Zustand, und
- Fig. 6: eine Schnittansicht der Kupplung, bei der eine Außenhülse und ein Kupplungskörper zusätzlich einen Bajonettverschluss bilden.

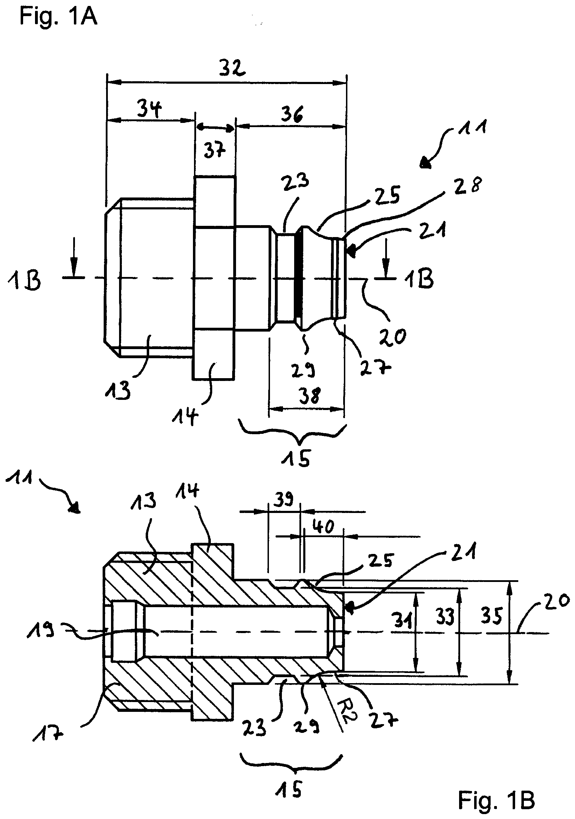

Fig. 1A und Fig. 1B zeigen einen Schmiernippel 11 gemäß einer Ausführungsform der Erfindung. Der Schmiernippel 11 umfasst einen Gewindeabschnitt 13 und einen Sechskantabschnitt 14, die genormt und dafür vorgesehen sind, den Schmiernippel 11 beispielsweise an einem Gehäuse eines Lagers (nicht dargestellt) anzubringen bzw. anzuschrauben.

Wie in Fig. 1 B zu erkennen ist, weist der Schmiernippel 11 einen einstückigen Nippelkörper 17 auf, innerhalb dessen sich eine Längsbohrung 19 befindet. In der Längsbohrung 19 kann eine nicht dargestellte Kugel angeordnet sein, die mit einer Feder vorgespannt ist, um ein Rückschlagventil zu bilden. Durch ein solches Rückschlagventil kann verhindert werden, dass ein Schmiermittel, das über den Schmiernippel 11 einem Lager zugeführt wird, auf unbeabsichtigte Weise wieder aus dem Schmiernippel austritt.

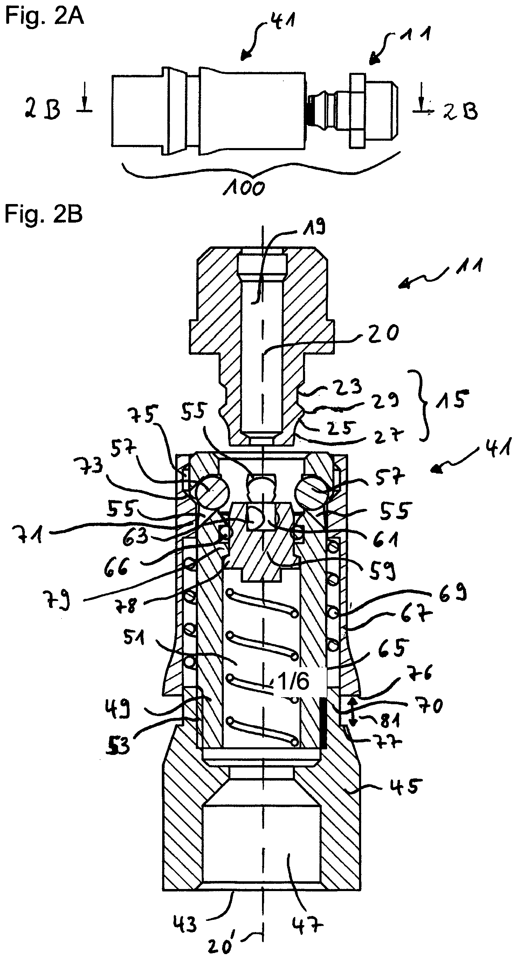

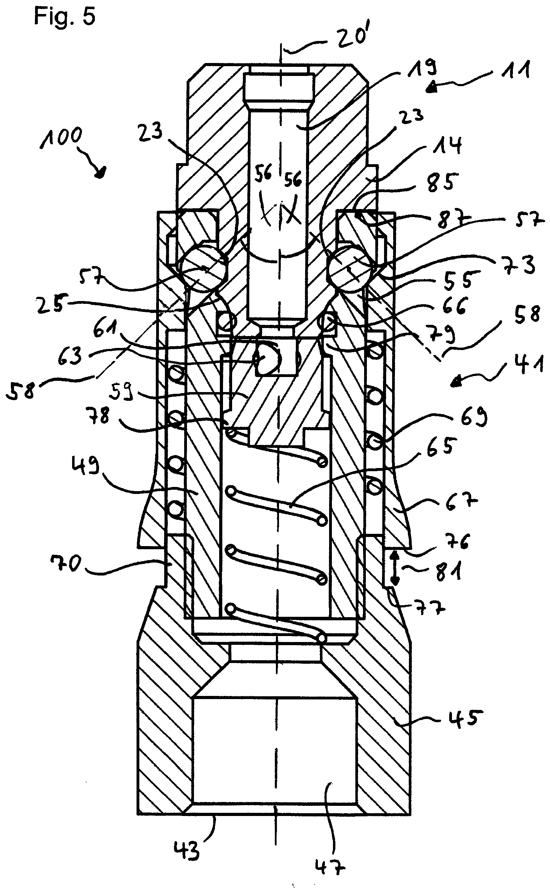

Der Schmiernippel 11 weist ferner einen Anschlussabschnitt 15 auf, der dafür vorgesehen ist, den Schmiernippel 11 mit einer erfindungsgemäßen Kupplung 41 (vgl. Fig. 2A bis Fig. 5) zu verbinden. Fig. 5 zeigt den verbundenen Zustand des Schmiernippels 11 und der Kupplung 41, die somit ein System 100 bilden.

Wie in Fig. 1A und Fig. 1B gezeigt ist, weist der Schmiernippel 11 ferner eine Längsachse 20 auf, die in der Mitte der Längsbohrung 19 verläuft. Die Längsbohrung 19, der Gewindeabschnitt 13 und der Anschlussabschnitt 15 sind bezüglich der Längsachse 20 rotationssymmetrisch. Der Anschlussabschnitt 15 umfasst ein Anschlussende 21, an welchem die Längsbohrung 19 endet, einen hinterschnittenen Abschnitt 23 und einen Führungsabschnitt 25, der zwischen dem Anschlussende 21 und dem hinterschnittenen Abschnitt 23 angeordnet ist. Zwischen dem Anschlussende 21 und dem Führungsabschnitt 25 umfasst der Anschlussabschnitt 15 ferner einen ersten geraden Abschnitt 27, während zwischen dem Führungsabschnitt 25 und dem hinterschnittenen Abschnitt 23 ein zweiter gerader Abschnitt 29 angeordnet ist.

An dem Anschlussende 21 weist der Anschlussabschnitt 15 einen Querschnittsdurchmesser 31 auf, der im vorliegenden Beispiel 5 mm beträgt. Darüber hinaus weist der erste gerade Abschnitt 27 über seine gesamte Länge entlang der Längsachse 20 einen konstanten Querschnittsdurchmesser auf. Zusätzlich ist zwischen dem ersten geraden Abschnitt 27 und dem Anschlussende 21 ein abgefaster Abschnitt 28 angeordnet, in welchem sich die Außenkontur des Anschlussabschnitts 15 unter Verringerung des Querschnittsdurchmessers in Richtung der Längsachse 20 erstreckt.

Innerhalb des hinterschnittenen Abschnitts 23 weist der Anschlussabschnitt 15 jedoch einen Querschnittsdurchmesser 33 auf, der größer als der Querschnittsdurchmesser 31 an dem Anschlussende 21 ist und im vorliegenden Beispiel 5,5 mm beträgt. Ferner weist der Anschlussabschnitt 15 innerhalb des zweiten geraden Abschnitts 29 konstant seinen maximalen Querschnittsdurchmesser 35 auf, der im vorliegenden Beispiel 6,5 mm beträgt.

Innerhalb des Führungsabschnitts 25 nimmt der Querschnittsdurchmesser des Anschlussabschnitts 15 ausgehend von dem Querschnittsdurchmesser des ersten geraden Abschnitts 27 entlang der Längsachse 20 in Richtung des hinterschnittenen Abschnitts 23 zu, so dass der Führungsabschnitt 25 an seinem Übergang zu dem zweiten geraden Abschnitt 29 dessen maximalen Querschnittsdurchmesser 35 aufweist. Der Querschnittsdurchmesser nimmt dabei innerhalb des Führungsabschnitts 25 derart zu, dass dieser einen konstanten Krümmungsradius R2 aufweist.

Im vorliegenden Ausführungsbeispiel weist der Schmiernippel 11 ferner entlang der Längsachse 20 eine Gesamtlänge 32 von 15 mm auf, während der Gewindeabschnitt 13 und der Anschlussabschnitt 15 eine Länge 34 bzw. 36 von 5,5 mm bzw. 7 mm entlang der Längsachse 20 aufweisen. Dadurch ergibt sich eine Länge 37 von 2,5 mm für den Sechskantabschnitt 14.

Innerhalb des Anschlussabschnitts 15 beträgt eine Länge 38 einschließlich des hinterschnittenen Abschnitts 23 bis zu dem Anschlussende 21 im vorliegenden Beispiel 4,78 mm, wobei der hinterschnittene Abschnitt 23 eine Gesamtlänge 39 entlang der Längsachse 20 aufweist, die 2,04 mm beträgt. Eine Gesamtlänge 40 zwischen einem Ende des hinterschnittenen Abschnitts 23 und dem Anschlussende 21, d.h. einschließlich des Führungsabschnitts 25 und des ersten geraden Abschnitts 27, aber ohne den hinterschnittenen Abschnitt 23, beträgt 2,49 mm.

Fig. 2A und Fig. 2B zeigen den Schmiernippel 11 von Fig. 1A und Fig. 1B zusammen mit einer Ausführungsform der erfindungsgemäßen Kupplung 41. Die Kupplung 41 ist dafür vorgesehen, den Schmiernippel 11 beispielsweise mit einer nicht dargestellten Fettpresse zu verbinden. Zu diesem Zweck weist die Kupplung 41 ein Kupplungsende 43 an einem Kupplungskörper 45 auf, innerhalb dessen sich eine Längsbohrung 47 befindet, die an dem Kupplungsende 43 endet. Das Kupplungsende 43 ist für die Verbindung der Kupplung 41 mit der nicht dargestellten Fettpresse vorgesehen, so dass ein hydraulisches Schmiermittel über das Kupplungsende 43 in das Innere der Kupplung 41 und über die Kupplung 41 in den Schmiernippel 11 bzw. dessen Längsbohrung 19 gelangt.

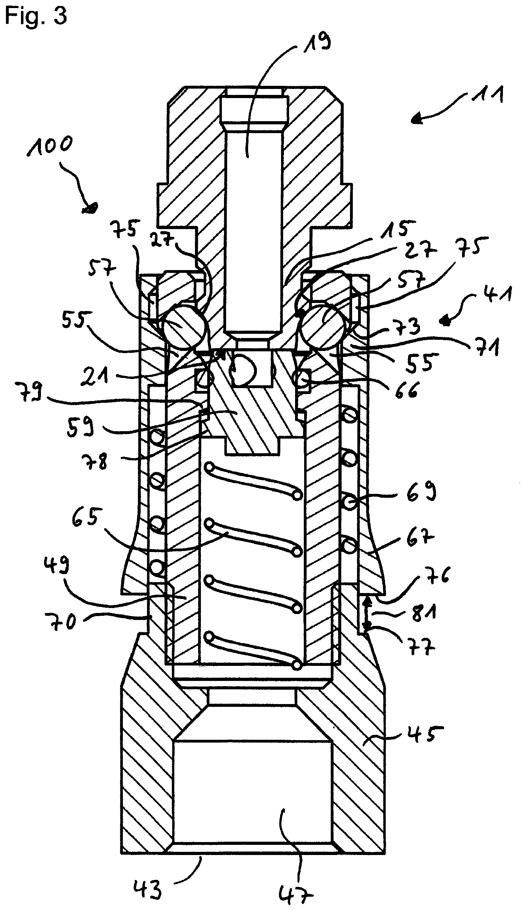

Die Kupplung 41 weist ferner eine Innenhülse 49 auf, die eine Längsbohrung 51 umgibt und mittels einer Dichtung 53 mit dem Kupplungskörper 45 verbunden ist. In einem oberen Abschnitt (d.h. vom Kupplungskörper 45 entfernt) umfasst die Innenhülse 49 mehrere bezüglich einer Längsachse 20' der Kupplung 41 schräg verlaufende Bohrungen 55, in denen jeweils eine Kugel 57 angeordnet ist. Insgesamt weist die Innenhülse 49 vier Bohrungen 55 mit jeweiligen Kugeln 57 auf, von denen drei in Fig. 2B dargestellt sind. Die Kugeln 57 dienen als Befestigungselement für den Schmiernippel 11, wie nachstehend im Zusammenhang mit Fig. 3 bis 5 näher erläutert wird. Die schräg verlaufenden Bohrungen 55 sind dabei in Richtung des Kupplungskörpers 45 bzw. des Kupplungsendes 43 der Kupplung 41 ausgerichtet. Bezüglich der Längsachse 20' weisen die Bohrungen einen Neigungswinkel 56 (vgl. Fig. 5) auf, der in einem Bereich zwischen 40° und 45° liegt. In Fig. 5 sind ferner rein schematisch jeweilige Mittelachsen 58 zweier Bohrungen 55 dargestellt, die mit der Längsachse 20' der jeweiligen Bohrung 55 den Neigungswinkel 56 einschließen.

Die Kupplung 41 umfasst ferner einen Kolben 59, der innerhalb der Innenhülse 49 angeordnet ist. Der Kolben 59 weist eine Längsbohrung 61 auf, die an einem dem Kupplungskörper 45 abgewandten Ende des Kolbens 59 beginnt und innerhalb des Kolbens 59 endet. Die Längsbohrung 61 des Kolbens 59 ist jedoch mit einem inneren Kanal 63 des Kolbens 59 verbunden, der mit der Längsbohrung 51 der Innenhülse 49 in Verbindung steht, wenn die Kupplung 41 vollständig mit dem Schmiernippel 11 verbunden ist (vgl. Fig. 5). Der Kolben 49 ist ferner mittels einer inneren Feder 65 gegenüber dem Kupplungskörper 45 vorgespannt, an welchem sich die innere Feder 65 abstützt. Darüber hinaus ist der Kolben 59 gegenüber der Innenhülse 49 mittels eines O-Rings 66 abgedichtet, der sich in einer Aussparung der Innenhülse 49 befindet.

Die Kupplung 41 umfasst außerdem eine Außenhülse 67, welche die Innenhülse 49 umgibt und bezüglich des Kupplungskörpers 45 beweglich ist. Die Außenhülse 67 ist dabei mittels einer äußeren Feder 69 gegenüber dem Kupplungskörper 45 auf die gleiche Weise wie der Kolben 59 vorgespannt, so dass sich die äußere Feder 69 ebenfalls an dem Kupplungskörper 45 abstützt. Die Außenhülse 67 steht mit dem Kupplungskörper 45 an einem zurückversetzten Abschnitt 70 des Kupplungskörpers 45 in Verbindung. Entlang dieses zurückversetzten Abschnitts 70 ist die Außenhülse 67 gegenüber dem Kupplungskörper 45 verschiebbar.

Die Außenhülse 67 weist an ihrer Innenseite einen Vorsprung 71 auf. An einer Seite des Vorsprungs 71 liegt die äußere Feder 69 an, während der Vorsprung 71 auf der gegenüberliegenden Seite eine schräge Fläche 73 aufweist, an der die Kugeln 57 anliegen, die in den jeweiligen Bohrungen 55 der Innenhülse 49 angeordnet sind. Die schräge Fläche 73 geht ferner in einen ausgesparten Abschnitt 75 der Außenhülse 67 über.

Fig. 2B zeigt einen Zustand des Systems 100, in welchem der Schmiernippel 11 und die Kupplung 41 zwar entlang ihrer Längsachsen 20, 20' ausgerichtet, aber noch nicht miteinander verbunden sind. In dem Zustand von Fig. 2B sind die innere Feder 65 und die äußere Feder 69 entspannt, so dass der Kolben 59 und die Außenhülse 67 gegenüber dem Kupplungskörper 45 vorgespannt sind und der Kolben 59 einen maximalen Abstand bezogen auf den Kupplungskörper 45 aufweist, während eine dem Kupplungskörper 45 zugewandte Seitenfläche 76 der Außenhülse 67 bezogen auf eine Seitenfläche 77 des zurückversetzten Abschnitts 70 des Kupplungskörpers 45 einen maximalen Abstand 81 aufweist. Außerdem liegt in dem in Fig. 2B dargestellten Zustand ein Vorsprung 78 des Kolbens 59 an einem Vorsprung 79 der Innenhülse 49 an.

Fig. 3 zeigt einen Zustand des Systems 100, in welchem der Schmiernippel 11 beginnt, mit der Kupplung 41 in Eingriff zu gelangen. In diesem Zustand liegen die Kugeln 57 an dem Führungsabschnitt 25 innerhalb des Anschlussabschnitts 15 des Schmiernippels 11 an, während das Anschlussende 21 an der Seite des Kolbens 59 der Kupplung 41 anliegt, die von dem Kupplungskörper 45 abgewandt ist.

Die äußere Feder 69 ist in dem in Fig. 3 gezeigten Zustand weiterhin entspannt, so dass zwischen der Seitenfläche 76 der Außenhülse 67 und der Seitenfläche 77 des zurückversetzten Abschnitts 70 des Kupplungskörpers 45 weiterhin der maximale Abstand 81 vorhanden ist. Das Anschlussende 21 des Schmiernippels 11 drückt jedoch in dem Zustand von Fig. 3 bereits derart auf den Kolben 59, dass der Vorsprung 78 des Kolbens 59 nicht mehr an dem Vorsprung 79 der Innenhülse 49 anliegt, sondern von diesem beabstandet ist. Dadurch ist auch die innere Feder 65 im Vergleich zu dem Zustand von Fig. 2B leicht gespannt.

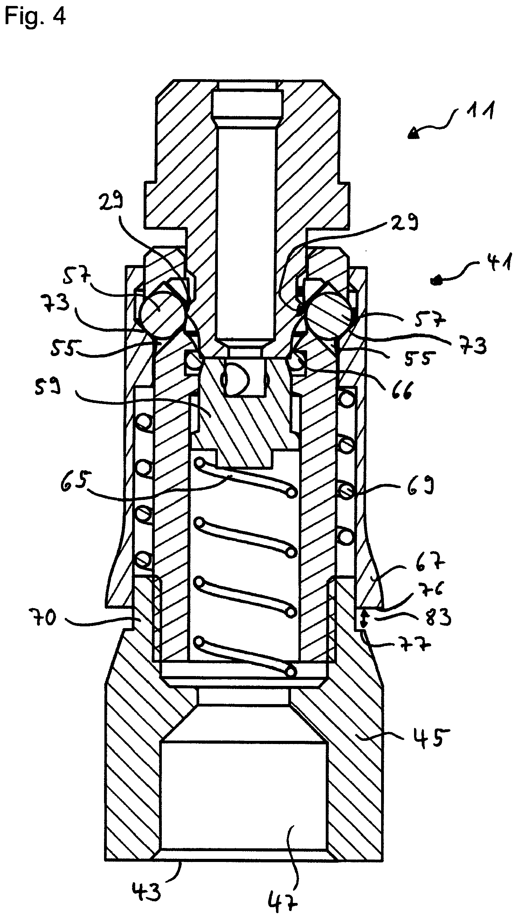

In dem in Fig. 4 gezeigten Zustand des Systems 100 ist der Schmiernippel 11 derart weiter in Eingriff mit der Kupplung 41 gelangt, dass die Kugeln 57 nicht mehr an dem Führungsabschnitt 25 des Schmiernippels 11, sondern an dem zweiten geraden Abschnitt 29 des Schmiernippels 11 anliegen. Dadurch sind die Kugeln 57 innerhalb der jeweiligen Bohrungen 55 bezogen auf den Zustand von Fig. 2B und Fig. 3 in Richtung der Außenhülse 67 verschoben. Mit anderen Worten werden die Kugeln 59 ausgehend von dem in Fig. 3 dargestellten Zustand in der jeweiligen Bohrung 55 nach außen verschoben, d.h. von der Längsachse 20' weg (vgl. Fig. 2B und Fig. 5), da sie an dem Anschlussabschnitt 15 des Schmiernippels 11, dessen Querschnitt ausgehend von dem Anschlussende 21 zunimmt, entlang gleiten.

Da die Kugeln 57 außerdem an der schrägen Fläche 73 der Außenhülse 67 anliegen, werden die Kugeln 57 außerdem an der schrägen Fläche 73 entlang in den ausgesparten Abschnitt 75 hinein verschoben. Dadurch wird die Außenhülse 67 in Richtung des Kupplungskörpers 45 verschoben, so dass die Seitenfläche 76 der Außenhülse 67 bezogen auf die Seitenfläche 77 des zurückversetzten Abschnitts 70 des Kupplungskörpers 45 einen verringerten bzw. minimalen Abstand 83 aufweist. Durch die Verschiebung der Außenhülse 67 in Richtung des Kupplungskörpers 45 wird außerdem die äußere Feder 69 im Vergleich zum Zustand von Fig. 2B und Fig. 3 gespannt.

Der Kolben 59 ist in dem in Fig. 4 dargestellten Zustand im Vergleich zu den Zuständen von Fig. 2B und Fig. 3 weiter in Richtung des Kupplungskörpers 45 verschoben, so dass die innere Feder 65 im Vergleich zu dem Zustand von Fig. 3 stärker gespannt ist. Außerdem befindet sich der O-Ring 66 in dem Zustand von Fig. 4 an der Seite des Kolbens 59, die dem Kupplungskörper 45 abgewandt ist.

In dem in Fig. 5 gezeigten Zustand des Systems 100 sind der Schmiernippel 11 und die Kupplung 41 vollständig miteinander verbunden. In diesem Zustand stehen die Kugeln 57 der Kupplung 41 mit dem hinterschnittenen Abschnitt 23 des Schmiernippels 11 in Eingriff, so dass die Kugeln 57 als Befestigungselement für den Schmiernippel 11 an der Kupplung 41 wirken. Außerdem liegt eine Seitenfläche 85 des Sechskantabschnitts 14 des Schmiernippels 11 an einer Oberseite 87 der Innenhülse 49 der Kupplung 41 an.

Wenn die Kugeln 57 mit dem hinterschnittenen Abschnitt 23 des Schmiernippels 11 in Eingriff gelangen, wird die Außenhülse 67 der Kupplung 41 wieder von dem Kupplungskörper 45 weg verschoben, da sich die äußere Feder 69 entspannt und dadurch eine Kraft auf die Außenhülse 67 parallel zur Längsachse 20' ausübt. Dadurch werden die Kugeln 57 wieder innerhalb der jeweiligen Bohrungen 55 in Richtung der Längsachse 20' verschoben und in dem hinterschnittenen Abschnitt 23 des Schmiernippels 11 fixiert. In dem Zustand von Fig. 5 ist die äußere Feder 69 ebenso wie in dem Zustand von Fig. 2B entspannt, und die Seitenfläche 76 der Außenhülse 67 weist bezogen auf die Seitenfläche 77 des zurückversetzten Abschnitts 70 des Kupplungskörpers 45 erneut den maximalen Abstand 81 auf.

Der Kolben 59 weist hingegen in dem in Fig. 5 gezeigten Zustand des Systems 100 einen minimalen Abstand bezogen auf den Kupplungskörper 45 auf, so dass die innere Feder 65 in dem in Fig. 5 gezeigten Zustand im Vergleich zu den Zuständen von Fig. 2B bis Fig. 4 am stärksten gespannt ist. Der innere Kanal 63 des Kolbens 59 ist in dem Zustand von Fig. 5 mit der Längsbohrung 51 der Innenhülse 49 verbunden. Dadurch gelangt ein Schmiermittel, das über das Kupplungsende 43 in die Kupplung 41 eintritt, über den inneren Kanal 63 und die Längsbohrung 61 des Kolbens 59 in die Längsbohrung 19 des Schmiernippels 11.

Der O-Ring 66 befindet sich in dem in Fig. 5 dargestellten Zustand oberhalb des Kolbens 59 und liegt an dem Führungsabschnitt 25 des Schmiernippels 11 an. Der Kolben 59 befindet sich somit zwischen dem O-Ring 66 und dem Kupplungskörper 45 der Kupplung 41. Dadurch dichtet der O-Ring 66 die Längsbohrung 51 der Innenhülse 49 gegenüber den Bohrungen 55 der Innenhülse 49 und somit gegenüber der Außenhülse 67 ab.

Zum Lösen des Schmiernippels 11 von der Kupplung 41 wird die Außenhülse 67 manuell in Richtung des Kupplungskörpers 45 verschoben, bis der in Fig. 4 dargestellte Zustand hergestellt wird. Durch das Verschieben der Außenhülse 67 gelangen die Kugeln 57 außer Eingriff des hinterschnittenen Abschnitts 23 des Schmiernippels 11, und sie bewegen sich innerhalb der jeweiligen Bohrung 55 von der Längsachse 20' weg, da sich der Kolben 59 aufgrund der Spannung der inneren Feder 65 von dem Kupplungskörper 45 wegbewegt. Sobald die Kugeln 57 außer Eingriff des hinterschnittenen Abschnitts 23 gelangt sind, lässt sich der Schmiernippel 11 leicht von der Kupplung 41 entfernen.

Durch das Zusammenwirken des Führungsabschnitts 25 und des zweiten geraden Abschnitts 29 des Schmiernippels 11 mit den Kugeln 57 der Kupplung 41, die sich innerhalb der schrägen Bohrungen 55 der Innenhülse 49 bewegen (vgl. Fig. 3 und Fig. 4), lässt sich das Schmiernippel 11 mit einem geringen Kraftaufwand mit der Kupplung 41 verbinden. Da die Kugeln 57 an dem Führungsabschnitt 25 und dem geraden Abschnitt 29 entlanggleiten, tritt darüber hinaus nur eine geringe Reibung zwischen dem Schmiernippel 11 und der Kupplung 41 auf, wenn diese miteinander verbunden werden. Dadurch wird die Abnutzung des Schmiernippels 11 im Vergleich zu den normierten Schmiernippeln gemäß dem Stand der Technik verringert.

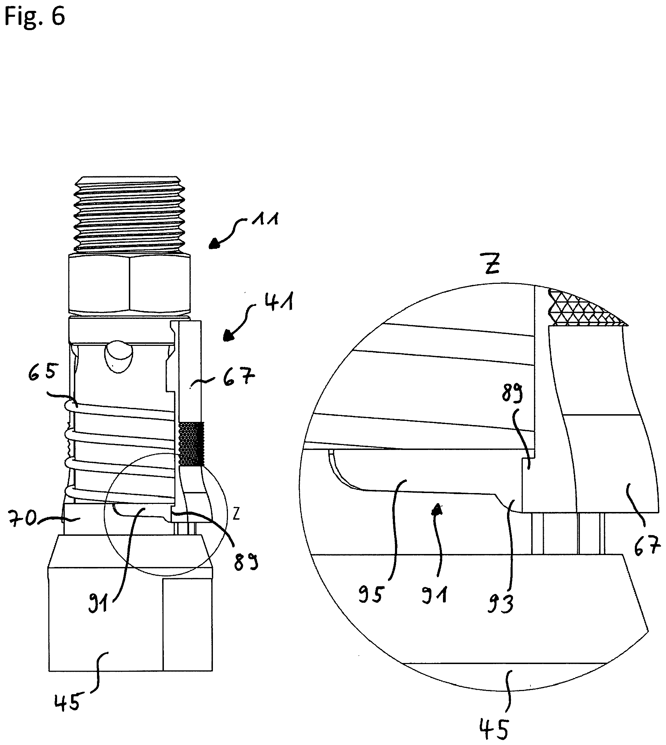

Fig. 6 zeigt eine Schnittansicht einer Variante der Kupplung 41, bei der zwischen der Außenhülse 67 und dem Kupplungskörper 45 eine zusätzliche Sicherung in der Form eines Bajonettverschlusses vorgesehen ist. Die Außenhülse 67 weist daher an ihrer Innenfläche einen Vorsprung 89 auf, während der Kupplungskörper 45 in dem zurückversetzten Abschnitt 70 eine Aussparung 91 aufweist.

Die Aussparung 91 des Kupplungskörpers 45 umfasst einen ersten Abschnitt 93 und einen zweiten Abschnitt 95. Wie in Fig. 6 im Ausschnitt Z zu erkennen ist, weist der erste Abschnitt 93 eine erste Tiefe bezogen auf ein Ende des Kupplungskörpers 45 auf, das der Außenhülse 67 zugewandt ist, während der zweite Abschnitt 95 eine entsprechende zweite Tiefe aufweist, wobei die erste Tiefe größer als die zweite Tiefe ist. Die beiden Abschnitte 93, 95 stellen eine abgestufte Kulissenführung für den Vorsprung 89 der Außenhülse 67 bereit.

Der in Fig. 6 gezeigte Zustand der Kupplung 41 entspricht dem Zustand von Fig. 5, bei dem der Schmiernippel 11 mit der Kupplung 41 verbunden ist. Durch Verdrehen der Außenhülse 67 kann der Vorsprung 89 mit der Aussparung 91 des Kupplungskörpers 45 derart in Eingriff gebracht werden kann, dass die Außenhülse 67 an dem Kupplungskörper 67 verriegelt ist. Dies verhindert eine unerwünschte Verschiebung der Außenhülse 67 gegenüber dem Kupplungskörper 45 und damit ein unerwünschtes Lösen des Schmiernippels 11 von der Kupplung 41. Die zusätzliche Verriegelung der Außenhülse 67 mittels des Bajonettverschlusses ist vor allem dann vorteilhaft, wenn das Schmiermittel unter erhöhtem Druck steht, das mittels des Schmiernippels 11 und der Kupplung 41 einem zu schmierenden Gegenstand zugeführt werden soll.

### Bezugszeichenliste

- 11: Schmiernippel
- 13: Gewindeabschnitt
- 14: Sechskantabschnitt
- 15: Anschlussabschnitt
- 17: Nippelkörper
- 19: Längsbohrung
- 20: Längsachse des Schmiernippels
- 20': Längsachse der Kupplung
- 21: Anschlussende
- 23: hinterschnittener Abschnitt
- 25: Führungsabschnitt
- 27: erster gerader Abschnitt
- 28: abgefaster Abschnitt
- 29: zweiter gerader Abschnitt
- 31: minimaler Querschnittsdurchmesser
- 32: Gesamtlänge des Schmiernippels
- 33: Querschnittsdurchmesser des hinterschnittenen Abschnitts
- 34: Länge des Gewindeabschnitts
- 35: maximaler Querschnittsdurchmesser
- 36: Länge des Anschlussabschnitts
- 37: Länge des Sechskantabschnitts
- 38: Länge zwischen dem hinterschnittenen Abschnitt und dem Anschlussende
- 39: Länge des hinterschnittenen Abschnitts
- 40: Länge zwischen dem hinterschnittenen Abschnitt und dem Anschlussende
- 41: Kupplung
- 43: Kupplungsende
- 45: Kupplungskörper
- 47: Längsbohrung des Kupplungskörpers
- 49: Innenhülse
- 51: Längsbohrung der Innenhülse
- 53: Dichtung
- 55: Bohrung der Innenhülse
- 56: Neigungswinkel der Bohrung
- 57: Kugel
- 58: Mittelachse der Bohrung
- 59: Kolben
- 61: Längsbohrung des Kolbens
- 63: innerer Kanal des Kolbens
- 65: innere Feder
- 66: O-Ring
- 67: Außenhülse
- 69: äußere Feder
- 70: zurückversetzter Abschnitt des Kupplungskörpers
- 71: Vorsprung der Außenhülse
- 73: schräge Fläche
- 75: ausgesparter Abschnitt
- 76: Seitenfläche der Außenhülse
- 77: Seitenfläche des zurückversetzten Abschnitts
- 78: Vorsprung des Kolbens
- 79: Vorsprung der Innenhülse
- 81: maximaler Abstand
- 83: minimaler Abstand
- 85: Seitenfläche des Sechskantabschnitts
- 87: Oberseite der Innenhülse
- 89: Vorsprung
- 91: Aussparung
- 93: erster Abschnitt der Aussparung
- 95: zweiter Abschnitt der Aussparung
- 100: System mit Schmiernippel und Kupplung

## Patentansprüche

1. Schmiernippel (11) mit
einem Anschlussabschnitt (15) zur Verbindung des Schmiernippels (11) mit einer Kupplung (41) und
einer Längsachse (20),
wobei der Anschlussabschnitt (15) ein Anschlussende (21), einen hinterschnittenen Abschnitt (23) für einen Eingriff eines Befestigungselements (57) der Kupplung (41) und einen zwischen dem Anschlussende (21) und dem hinterschnittenen Abschnitt (23) angeordneten Führungsabschnitt (25) für das Befestigungselement (57) der Kupplung (41) aufweist,
wobei der Anschlussabschnitt (15) zwischen dem Anschlussende (21) und dem hinterschnittenen Abschnitt (23) an zumindest einer Position entlang der Längsachse (20) in einer Ebene senkrecht zu der Längsachse (20) einen maximalen Querschnitt (35) aufweist, und
wobei sich in einer Ebene durch die Längsachse (20) die Außenkontur des Führungsabschnitts (25) innerhalb einer geradlinigen Verbindung zwischen dem Außenumfang des Anschlussendes (21) und dem maximalen Querschnitt (35) erstreckt,
**dadurch gekennzeichnet,**
**dass** der Anschlussabschnitt (15) zwischen dem Führungsabschnitt (25) und dem Anschlussende (21) einen Abschnitt (27) mit einem konstanten Querschnitt (31) aufweist, der geringer als der Querschnitt (33) innerhalb des hinterschnittenen Abschnitts (23) ist.

2. Schmiernippel (11) nach Anspruch 1,
**dadurch gekennzeichnet,**
**dass** die Außenkontur des Führungsabschnitts (25) in einer Ebene durch die Längsachse (20) konkav gekrümmt ist.

3. Schmiernippel (11) nach Anspruch 2,
**dadurch gekennzeichnet,**
**dass** der Führungsabschnitt (25) einen insbesondere konstanten Krümmungsradius (R2) aufweist.

4. Kupplung (41) für einen Schmiernippel (11), umfassend:
einen Kupplungskörper (45),
eine mit dem Kupplungskörper (45) verbundene Innenhülse (49), und
ein Befestigungselement (57), das ausgebildet ist, den Schmiernippel (11) in einer vorbestimmten Position bezüglich der Innenhülse (49) zu fixieren,
**dadurch gekennzeichnet, dass**
die Innenhülse (49) zumindest eine Bohrung (55) aufweist, die bezogen auf eine Längsachse (20') der Kupplung (41) schräg verläuft, und dass das Befestigungselement (57) in der zumindest einen Bohrung (55) der Innenhülse (49) beweglich angeordnet ist.

5. Kupplung (41) nach Anspruch 4,
**gekennzeichnet durch**
eine bewegliche Außenhülse (67), die mittels eines äußeren Vorspannelements (69) gegenüber dem Kupplungskörper (45) vorgespannt ist,
wobei das Befestigungselement (57) in einen ausgesparten Abschnitt (75) der Außenhülse (67) verschiebbar ist, um die Außenhülse (67) in Richtung des Kupplungskörpers (45) zu verschieben.

6. Kupplung (41) nach Anspruch 5,
**dadurch gekennzeichnet,**
**dass** die Außenhülse (67) an einer Innenfläche einen Vorsprung (89) aufweist, der mit einer Aussparung (91) des Kupplungskörpers (45) einen Bajonettverschluss bildet.

7. Kupplung (41) nach Anspruch 6,
**dadurch gekennzeichnet,**
**dass** die Aussparung (91) des Kupplungskörpers (45) mehrere Abschnitte (93, 95) umfasst, die eine gestufte Kulissenführung für den Vorsprung (89) der Außenhülse (67) bereitstellen.

8. Kupplung (41) nach einem der Ansprüche 4 bis 7,
**dadurch gekennzeichnet,**
**dass** das Befestigungselement (57) mehrere Kugeln (57) umfasst, die in einer jeweiligen Bohrung (55) der Innenhülse (49) angeordnet sind.

9. Kupplung (41) nach Anspruch 8,
**dadurch gekennzeichnet,**
**dass** die jeweiligen Bohrungen (55) der Innenhülse (49) unter einem Neigungswinkel (56) zwischen 40 und 45 Grad bezüglich der Längsachse (20') der Kupplung (41) verlaufen.

10. Kupplung (41) nach einem der Ansprüche 4 bis 9,
**gekennzeichnet durch**
einen beweglichen Kolben (59), der innerhalb der Innenhülse (49) angeordnet ist und einen Durchgang (61, 63) für ein Schmiermittel aufweist,
wobei der Kolben (59) mittels eines inneren Vorspannelements (65) gegenüber dem Kupplungskörper (45) vorgespannt ist und sich in einer Anfangsposition befindet, wenn kein Schmiernippel (11) mit der Kupplung (41) verbunden ist, und
wobei der Kolben (59) bezüglich der Anfangsposition in Richtung des Kupplungskörpers (45) verschoben ist und der Durchgang (61, 63) des Kolbens (59) mit einer Längsbohrung (19) des Schmiernippels (11) in Verbindung steht, wenn die Kupplung (41) mit dem Schmiernippel (11) verbunden ist.

11. Kupplung (41) nach Anspruch 10,
**gekennzeichnet durch**
ein Dichtungselement (66), das zwischen dem Kolben (59) und der Innenhülse (49) angeordnet ist, wenn sich der Kolben (59) in der Anfangsposition befindet,
wobei sich der Kolben (59) dann, wenn die Kupplung (41) mit dem Schmiernippel (11) verbunden ist, zwischen dem Dichtungselement (66) und dem Kupplungskörper (45) befindet.

12. System (100), umfassend:
einen Schmiernippel (11) nach einem der Ansprüche 1 bis 3 und
eine Kupplung (41) nach einem der Ansprüche 4 bis 9,
wobei sich das Befestigungselement (57) der Kupplung (41) dann, wenn der Schmiernippel (11) mit der Kupplung (41) in Eingriff gelangt, entlang des Führungsabschnitts (25) des Schmiernippels (11) und in der Bohrung (55) der Kupplung (41) von der Längsachse (20) des Schmiernippels (11) weg nach außen bewegt, und
wobei das Befestigungselement (57) anschließend mit dem hinterschnittenen Abschnitt (23) des Schmiernippels (11) in Eingriff steht, um den Schmiernippel (11) und die Kupplung (41) aneinander zu fixieren.

13. Schmiersystem, umfassend zumindest einen Schmiermittelkanal und zumindest einen Schmiernippel (11) nach einem der Ansprüche 1 bis 3.

14. Verwendung eines Schmiernippels nach einem der Ansprüche 1 bis 3 in einem Schmiersystem als Schmiernippel.

## Claims

1. A lubrication nipple (11) comprising
a connection section (15) for connecting the lubrication nipple (11) to a coupling (41), and
a longitudinal axis (20),
wherein the connection section (15) has a connection end (21), an undercut section (23) for an engagement of a fastening element (57) of the coupling (41) and a guide section (25), which is arranged between the connection end (21) and the undercut section (23), for the fastening element (57) of the coupling (41),
wherein the connection section (15) has a maximum cross-section (35) between the connection end (21) and the undercut section (23) at at least one position along the longitudinal axis (20) in a plane perpendicular to the longitudinal axis (20), and
wherein, in a plane through the longitudinal axis (20), the outer contour of the guide section (25) extends within a rectilinear connection between the outer periphery of the connection end (21) and the maximum cross-section (35),
**characterized in that**
the connection section (15) has, between the guide section (25) and the connection end (21), a section (27) having a constant cross-section (31) that is smaller than the cross-section (33) within the undercut section (23).

2. A lubrication nipple (11) in accordance with claim 1,
**characterized in that**
the outer contour of the guide section (25) is concavely curved in a plane through the longitudinal axis (20).

3. A lubrication nipple (11) in accordance with claim 2,
**characterized in that**
the guide section (25) has a radius of curvature (R2) which is in particular constant.

4. A coupling (41) for a lubrication nipple (11), comprising:
a coupling body (45),
an inner sleeve (49) connected to the coupling body (45), and
a fastening element (57) which is configured to fix the lubrication nipple (11) in a predetermined position with respect to the inner sleeve (49),
**characterized in that**
the inner sleeve (49) has at least one bore (55) which extends obliquely with respect to a longitudinal axis (20') of the coupling (41), and **in that** the fastening element (57) is movably arranged in the at least one bore (55) of the inner sleeve (49).

5. A coupling (41) in accordance with claim 4,
**characterized by**
a movable outer sleeve (67) which is preloaded with respect to the coupling body (45) by means of an outer preloading element (69),
wherein the fastening element (57) can be displaced into a cut-out section (75) of the outer sleeve (67) in order to displace the outer sleeve (67) in the direction of the coupling body (45).

6. A coupling (41) in accordance with claim 5,
**characterized in that**
the outer sleeve (67) has, at an inner surface, a projection (89) which forms a bayonet fastening with a cut-out (91) of the coupling body (45).

7. A coupling (41) in accordance with claim 6,
**characterized in that**
the cut-out (91) of the coupling body (45) comprises a plurality of sections (93, 95) which provide a stepped slot guide for the projection (89) of the outer sleeve (67).

8. A coupling (41) in accordance with any one of the claims 4 to 7,
**characterized in that**
the fastening element (57) comprises a plurality of balls (57) which are arranged in a respective bore (55) of the inner sleeve (49).

9. A coupling (41) in accordance with claim 8,
**characterized in that**
the respective bores (55) of the inner sleeve (49) extend at an angle of inclination (56) between 40 and 45 degrees with respect to the longitudinal axis (20') of the coupling (41).

10. A coupling (41) in accordance with any one of the claims 4 to 9,
**characterized by**
a movable piston (59) which is arranged within the inner sleeve (49) and which has a passage (61, 63) for a lubricant,
wherein the piston (59) is preloaded with respect to the coupling body (45) by means of an inner preloading element (65) and is in a starting position when no lubrication nipple (11) is connected to the coupling (41), and
wherein the piston (59) is displaced with respect to the starting position in the direction of the coupling body (45) and the passage (61, 63) of the piston (59) is in connection with a longitudinal bore (19) of the lubrication nipple (11) when the coupling (41) is connected to the lubrication nipple (11).

11. A coupling (41) in accordance with claim 10,
**characterized by**
a sealing element (66) which is arranged between the piston (59) and the inner sleeve (49) when the piston (59) is in the starting position,
wherein, when the coupling (41) is connected to the lubrication nipple (11), the piston (59) is located between the sealing element (66) and the coupling body (45).

12. A system (100) comprising:
a lubrication nipple (11) in accordance with any one of the claims 1 to 3, and
a coupling (41) in accordance with any one of the claims 4 to 9, wherein, when the lubrication nipple (11) enters into engagement with the coupling (41), the fastening element (57) of the coupling (41) moves outwardly away from the longitudinal axis (20) of the lubrication nipple (11) along the guide section (25) of the lubrication nipple (11) and in the bore (55) of the coupling (41), and
wherein the fastening element (57) is subsequently in engagement with the undercut section (23) of the lubrication nipple (11) to fix the lubrication nipple (11) and the coupling (41) to one another.

13. A lubrication system comprising at least one lubricant passage and at least one lubrication nipple (11) in accordance with any one of the claims 1 to 3.

14. Use of a lubrication nipple in accordance with any one of the claims 1 to 3 in a lubrication system as a lubrication nipple.

## Revendications

1. Mamelon de lubrification (11), comportant
une portion de raccordement (15) pour relier le mamelon de lubrification (11) à un accouplement (41), et
un axe longitudinal (20),
dans lequel
la portion de raccordement (15) présente une extrémité de raccordement (21), une portion en contre-dépouille (23) pour un engagement d'un élément de fixation (57) de l'accouplement (41), et une portion de guidage (25) pour l'élément de fixation (57) de l'accouplement (41) disposée entre l'extrémité de raccordement (21) et la portion en contre-dépouille (23),
la portion de raccordement (15) présente, entre l'extrémité de raccordement (21) et la portion en contre-dépouille (23), une section transversale maximale (35) à au moins une position le long de l'axe longitudinal (20) dans un plan perpendiculaire à l'axe longitudinal (20), et
dans un plan passant par l'axe longitudinal (20), le contour extérieur de la portion de guidage (25) s'étend à l'intérieur d'une liaison rectiligne entre la périphérie extérieure de l'extrémité de raccordement (21) et la section transversale maximale (35),
**caractérisé en ce que**
la portion de raccordement (15) présente, entre la portion de guidage (25) et l'extrémité de raccordement (21), une portion (27) ayant une section transversale constante (31) qui est inférieure à la section transversale (33) à l'intérieur de la portion en contre-dépouille (23).

2. Mamelon de lubrification (11) selon la revendication 1,
**caractérisé en ce que**
le contour extérieur de la portion de guidage (25) est incurvé de manière concave dans un plan passant par l'axe longitudinal (20).

3. Mamelon de lubrification (11) selon la revendication 2,
**caractérisé en ce que**
la portion de guidage (25) présente un rayon de courbure (R2) en particulier constant.

4. Accouplement (41) pour un mamelon de lubrification (11), comprenant :
un corps d'accouplement (45),
une douille intérieure (49) reliée au corps d'accouplement (45), et
un élément de fixation (57) qui est réalisé pour fixer le mamelon de lubrification (11) dans une position prédéterminée par rapport à la douille intérieure (49),
**caractérisé en ce que**
la douille intérieure (49) présente au moins un alésage (55) qui s'étend en oblique par rapport à un axe longitudinal (20') de l'accouplement (41), et **en ce que**
l'élément de fixation (57) est disposé de manière mobile dans ledit au moins un alésage (55) de la douille intérieure (49).

5. Accouplement (41) selon la revendication 4,
**caractérisé par**
une douille extérieure mobile (67) qui est précontrainte par rapport au corps d'accouplement (45) au moyen d'un élément de précontrainte extérieur (69),
l'élément de fixation (57) pouvant être déplacé dans une partie évidée (75) de la douille extérieure (67), afin de déplacer la douille extérieure (67) en direction du corps d'accouplement (45).

6. Accouplement (41) selon la revendication 5,
**caractérisé en ce que**
sur une surface intérieure, la douille extérieure (67) présente une saillie (89) qui forme une fermeture à baïonnette avec un évidement (91) du corps d'accouplement (45).

7. Accouplement (41) selon la revendication 6,
**caractérisé en ce que**
l'évidement (91) du corps d'accouplement (45) comprend plusieurs portions (93, 95) qui assurent un guidage à coulisse étagé pour la saillie (89) de la douille extérieure (67).

8. Accouplement (41) selon l'une des revendications 4 à 7,
**caractérisé en ce que**
l'élément de fixation (57) comprend plusieurs billes (57) disposées dans un alésage respectif (55) de la douille intérieure (49).

9. Accouplement (41) selon la revendication 8,
**caractérisé en ce que**
les alésages respectifs (55) de la douille intérieure (49) s'étendent selon un angle d'inclinaison (56) compris entre 40 et 45 degrés par rapport à l'axe longitudinal (20') de l'accouplement (41).

10. Accouplement (41) selon l'une des revendications 4 à 9,
**caractérisé par**
un piston mobile (59) disposé à l'intérieur de la douille intérieure (49) et présentant un passage (61, 63) pour un lubrifiant,
le piston (59) étant précontraint par rapport au corps d'accouplement (45) au moyen d'un élément de précontrainte intérieur (65) et étant dans une position initiale lorsqu'aucun mamelon de lubrification (11) n'est relié à l'accouplement (41), et
le piston (59) étant déplacé par rapport à la position initiale en direction du corps d'accouplement (45), et le passage (61, 63) du piston (59) communiquant avec un alésage longitudinal (19) du mamelon de lubrification (11) lorsque l'accouplement (41) est relié au mamelon de lubrification (11).

11. Accouplement (41) selon la revendication 10,
**caractérisé par**
un élément d'étanchéité (66) qui est disposé entre le piston (59) et la douille intérieure (49) lorsque le piston (59) est dans la position initiale,
le piston (59) étant situé entre l'élément d'étanchéité (66) et le corps d'accouplement (45) lorsque l'accouplement (41) est relié au mamelon de lubrification (11).

12. Système (100), comprenant :
un mamelon de lubrification (11) selon l'une des revendications 1 à 3, et
un accouplement (41) selon l'une des revendications 4 à 9,
dans lequel
lorsque le mamelon de lubrification (11) vient en engagement avec l'accouplement (41), l'élément de fixation (57) de l'accouplement (41) se déplace vers l'extérieur le long de la portion de guidage (25) du mamelon de lubrification (11) et dans l'alésage (55) de l'accouplement (41) en s'éloignant de l'axe longitudinal (20) du mamelon de lubrification (11), et
l'élément de fixation (57) s'engage ensuite avec la portion en contre-dépouille (23) du mamelon de lubrification (11), afin de fixer le mamelon de lubrification (11) et l'accouplement (41) l'un à l'autre.

13. Système de lubrification, comprenant au moins un canal à lubrifiant et au moins un mamelon de lubrification (11) selon l'une des revendications 1 à 3.

14. Utilisation d'un mamelon de lubrification selon l'une des revendications 1 à 3 comme mamelon de lubrification dans un système de lubrification.
